# EUROPÄISCHE PATENTANMELDUNG

(11) **EP 2 175 185 A1**
(43) Veröffentlichungstag der Anmeldung: **14.04.2010**
(21) Anmeldenummer: 08017589.6
(22) Anmeldetag: 07.10.2008
(51) Int. Cl.: F16L 55/10

(54) **Verfahren zum Trennen von unter Druck stehenden Gasleitungen**

(71) Anmelder: Stadtwerke Karlsruhe GmbH, 76127 Karlsruhe (DE)
(72) Erfinder: Prinz, Hans-Jürgen, 76189 Karlsruhe (DE)
(74) Vertreter: Lemcke, Brommer & Partner

(57) **Zusammenfassung**

Beschrieben wird ein Verfahren zum Trennen von unter Druck stehenden Gasleitungen (3), insbesondere Gasleitungen mit einem Außendurchmesser DN 32 bis DN 65 und einem Betriebsdruck bis 100 mbar, insbesondere Gasnetz- oder Hausanschlussleitungen, welches sich dadurch auszeichnet, dass in die zu trennende, unter Druck stehende Gasleitung (3) ein die Gasleitung durch Bildung eines Schaumpfropfens (4) abdichtender Schaum eingebracht wird, dass anschließend die Gasleitung (3) getrennt wird und dass dann die Gasleitung (3) an der Trennstelle (5) mit einem dauerhaften Verschlussmittel (6), insbesondere einer Endkappe, verschlossen wird. Das Verfahren ermöglicht das Trennen von Gasleitungen mit nur geringem Gasaustritt, moderatem zeitlichen und finanziellen Aufwand sowie kurzen verbleibenden Rohrstummeln, verbunden mit einem entsprechend verminderten Schadensrisiko.

## Beschreibung

Die Erfindung betrifft ein Verfahren zum Trennen von unter Druck stehenden Gasleitungen nach dem Oberbegriff des Patentanspruchs 1.

Für das Trennen von unter Druck stehenden Gasnetzanschlussleitungen gab es bisher zwei verschiedene Verfahrensweisen.

Entweder wird das Leitungsrohr zunächst mittels eines Rohrabschneiders durchtrennt und der Leitungsquerschnitt unter Einsatz eines sog. Dichtschnurknäuels lediglich provisorisch verschlossen.

Die andere Möglichkeit, wie sie beispielsweise in der US 5,878,884 beschrieben ist, beinhaltet das Einsetzen einer sog. Absperrblase in das Leitungsrohr und dessen anschließende Durchtrennung.

Bei beiden Verfahren wird schließlich eine Endkappe, ein Metallstopfen oder -keil auf bzw. in das Rohrende geschweißt.

Das Trennen einer Netzanschlussleitung ohne vorherige Unterbrechung der Gaszufuhr stellt nach geltenden Vorschriften, beispielsweise der BGR 500 / Teil 2 Kapitel 2.31 ein Arbeitsverfahren mit erhöhter Gefährdung dar, da es mit dem Austritt größerer Mengen an Gas in einer Größenordnung von ca. 500 Litern verbunden ist. Es darf deshalb nur in Ausnahmefällen und unter Beachtung besonderer und umfangreicher Sicherheitsmaßnahmen durchgeführt werden.

Der Einsatz einer Absperrblase - wie oben beschrieben - ist nur unter hohem zeitlichem und finanziellem Aufwand möglich. Das Trennen von unter Druck stehenden Gasnetzanschlussleitungen mittels einer Absperrblase dauert durchschnittlich etwa drei bis vier Stunden. Die Anschaffungskosten von sog. "Mini-Anbohr- und Blasensetzgeräten", die zurzeit von verschiedenen Herstellern angeboten werden, betragen pro Gerät ca. 2.500,- €. Außerdem bleiben bei diesem Verfahren aufgrund des erhöhten Platzbedarfs zum Setzen der Blase verhältnismäßig lange "Rohrstummel" an der Hauptleitung zurück, die ein zusätzliches Schadensrisiko darstellen. Diese sind je nach örtlichen Gegebenheiten durchschnittlich etwa 30 bis 40 cm lang, teilweise auch länger.

Der Erfindung liegt gegenüber diesem Stand der Technik die Aufgabe zugrunde, ein Verfahren zum Trennen von unter Druck stehenden Gasleitungen anzugeben, welches mit geringerem materiellen, finanziellen und auch zeitlichen Aufwand durchgeführt werden kann, ohne dass dabei zu viel Gas aus der Gasleitung entweicht.

Die Erfindung löst diese Aufgabe auf der Grundlage des beigefügten Anspruchsbegehrens mit einem Verfahren der oben genannte Art, welches sich dadurch auszeichnet, dass in die zu trennende, unter Druck stehende Gasleitung ein die Gasleitung durch Bildung eines Schaumpfropfens abdichtender Schaum eingebracht wird, dass anschließend die Gasleitung getrennt wird und dass dann die Gasleitung an der Trennstelle mit einem dauerhaften Verschlussmittel, wie einer Endkappe verschlossen wird.

Das erfindungsgemäße Verfahren ermöglicht das Trennen von unter Druck stehenden Gasleitungen mit äußerst geringem materiellen, finanziellen und zeitlichem Aufwand, ohne dass dabei ein sicherheitsrelevanter Gasverlust auftritt. Dazu wird vorzugsweise zunächst mit einer langsam laufenden Druckluftbohrmaschine beispielsweise etwa 20 cm entfernt von der Verbindung zu einer Versorgungsleitung ein Loch mit beispielsweise ca. 6 mm Durchmesser in die Gasleitung, insbesondere eine Netzanschlussleitung gebohrt. Bis zum Einbringen des Schaums wird die Bohrung vorzugsweise kurzfristig mit einem Verschlussmittel, wie einem Gummipfropfen abgedichtet.

Dann wird ein aushärtbarer Schaum mittels beispielsweise eines Kunststoffröhrchens durch das Bohrloch in das Leitungsrohr eingebracht. Dieser bildet im Innern des Rohres einen Schaumpfropfen, der die Bohrung in sekundenschnelle abdichtet. Dabei muss die Schaummenge möglichst exakt auf den jeweiligen Rohrdurchmesser der Netzanschlussleitung abgestimmt werden, um zu verhindern, dass der Schaum in die Versorgungsleitung gelangt.

Nach einem Zeitraum von typischerweise etwa 15 Minuten hat der Schaum abgebunden. Das Rohr kann nun wenige Zentimeter nach der Verbindung mit der Versorgungsleitung mit einem Rohrabschneider getrennt werden. Auf das offen liegende und mit Schaum abgedichtete Rohrende wird zuletzt ein dauerhaftes Verschlussmittel, wie eine Endkappe, geschweißt.

Ein vorteilhaftes Ausführungsbeispiel der Erfindung ist in der Zeichnung dargestellt und wird im Folgenden näher beschrieben. Es zeigt:
- Figur 1: einen Schnitt durch eine Gasversorgungsleitung mit angeschlossener, unter Druck stehender Gasnetzanschlussleitung während eines ersten Schrittes des erfindungsgemäßen Verfahrens; und
- Figur 2: die Versorgungsleitung und die Gasnetzanschlussleitung aus Figur 1 nach erfolgtem Trennen und Verschließen der Gasnetzanschlussleitung mittels des erfindungsgemäßen Verfahrens.

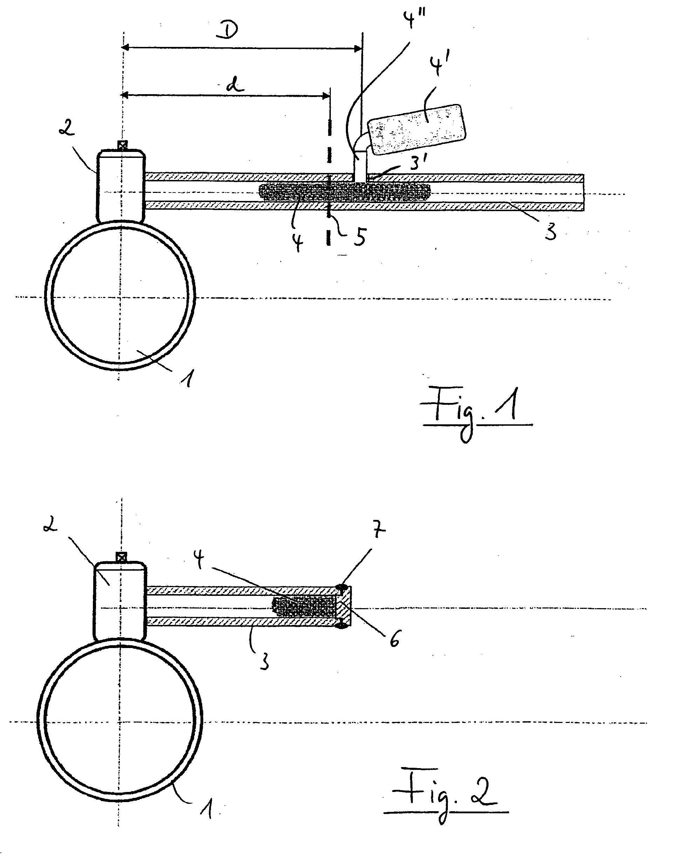

Figur 1 zeigt anhand einer schematischen Schnittdarstellung eine Gasversorgungsleitung 1, an die mittels eines T-Stücks 2 eine Gasnetzanschlussleitung oder Hausanschlussleitung 3 angeschlossen ist. In die unter Druck stehende Gasnetzanschlussleitung 3 wird durch eine Bohrung 3' in einem Abstand D von ungefähr 20 cm bezüglich der Mitte der Versorgungsleitung 1 aus einem Vorratsbehälter 4' über ein Kunststoffröhrchen 4" ein Schaum eingebracht, welcher in der Gasnetzanschlussleitung 3 einen Schaumpfropfen 4 bildet, der sich über die spätere Trennstelle 5 hinaus erstreckt, die in einem Abstand d, d < D, von etwa 15 cm bezüglich der Mitte der Versorgungsleitung 1 vorgesehen ist.

Gemäß Figur 2 wird anschließend die Gasnetzanschlussleitung 3 an der Trennstelle 5 (vergleiche Figur 1) getrennt und dort mittels einer Metallplatte 6 nach Art einer Endkappe verschlossen, wozu zwischen der Gasnetzanschlussleitung 3 und der Metallplatte 6 eine Schweißnaht 7 angebracht wird.

Mit dem hier dargestellten Verfahren tritt nur noch ein Gasverlust in der Größenordnung von unter 10 Litern auf. Bei Einhaltung aller sicherheitstechnischen Bestimmungen ist mit der Zustimmung der Berufgenossenschaft der Gas-, Fernwärme- und Wasserwirtschaft (BGFW) zur Einstufung als Arbeitsverfahren nach BGR 500 "Arbeiten an Gasleitungen mit geringer Gefährdung" zu rechnen.

Die Durchführung des hier dargestellten Verfahrens nimmt ca. zwei Stunden in Anspruch. Die Kosten für die benötigte Menge an Schaum belaufen sich auf etwa 15 Euro. Anschaffungskosten für spezielle Anbohr- und Blasensetzgeräte entfallen. Ein weiterer Vorteil dieses Verfahrens ist, dass die Länge der verbleibenden Rohstummel an der Hauptleitung lediglich etwa 15 cm beträgt und somit das Risiko einer Beschädigung durch Baggerarbeiten deutlich verringert ist.

Das Verfahren eignet sich ohne Beschränkung insbesondere zum Trennen von unter Druck stehenden Gasleitungen mit einem Außendurchmesser DN 32 bis DN 65 und einem Betriebsdruck bis 100 mbar.

## Patentansprüche

1. Verfahren zum Trennen von unter Druck stehenden Gasleitungen (3), insbesondere Gasleitungen mit einem Außendurchmesser DN 32 bis DN 65 und einem Betriebsdruck bis 100 mbar, insbesondere Gasnetz- oder Hausanschlussleitungen,
**dadurch gekennzeichnet,**
**dass** in die zu trennende, unter Druck stehende Gasleitung (3) ein die Gasleitung durch Bildung eines Schaumpfropfens (4) abdichtender Schaum eingebracht wird, dass anschließend die Gasleitung (3) getrennt wird und dass dann die Gasleitung (3) an der Trennstelle (5) mit einem dauerhaften Verschlussmittel (6), insbesondere einer Endkappe, verschlossen wird.

2. Verfahren nach Anspruch 1,
**dadurch gekennzeichnet,**
**dass** das Trennen der Gasleitung (3) im Bereich des Schaumpfropfens (4) erfolgt.

3. Verfahren nach Anspruch 1 oder 2,
**dadurch gekennzeichnet,**
**dass** die Gasleitung (3) zum Einbringen des Schaums geöffnet, insbesondere angebohrt wird.

4. Verfahren nach mindestens einem der Ansprüche 1 bis 3,
**dadurch gekennzeichnet,**
**dass** das Einbringen des Schaums in einer ersten Entfernung (D), insbesondere etwa 20 cm entfernt von einer Verbindung der Gasleitung (3) mit einer Gasversorgungsleitung (1) erfolgt.

5. Verfahren nach mindestens einer der Ansprüche 1 bis 4,
**dadurch gekennzeichnet,**
**dass** das Trennen der Gasleitung (3) in einer zweiten Entfernung (d), insbesondere etwa 15 cm entfernt von der Verbindung der Gasleitung (3) mit der Gasversorgungsleitung (1) erfolgt.

6. Verfahren nach zumindest Anspruch 3,
**dadurch gekennzeichnet,**
**das** die Öffnung (3') in der Gasleitung (3) bis zum Einbringen des Schaums verschlossen wird, insbesondere mittels eines Gummipfropfens.

7. Verfahren nach zumindest Anspruch 3 oder 6,
**dadurch gekennzeichnet,**
**dass** der Durchmesser der Öffnung (3') etwa 6 mm beträgt.

8. Verfahren nach zumindest einem der Ansprüche 3, 6 oder 7,
**dadurch gekennzeichnet,**
**dass** die Öffnung (3') mittels einer langsam laufenden Druckluftbohrmaschine geschaffen wird.
